# EUROPEAN PATENT APPLICATION

(11) **EP 1 826 662 A2**
(43) Date of publication of application: **29.08.2007**
(21) Application number: 06254559.5
(22) Date of filing: 31.08.2006
(51) Int. Cl.: G06F 3/06

(54) **Storage control device, and data migration method using storage control device**

(30) Priority: 24.02.2006 JP 2006047799
(71) Applicant: HITACHI, LTD., Chiyoda-ku Tokyo 100-8280 (JP)
(72) Inventor: Murotani, Akira, c/o Hitachi, Ltd., Int. Prop. Gr., Chiyoda-ku Tokyo 100-8220 (JP); Higaki, Seiichi, c/o Hitachi, Ltd., Int. Prop. Gr., Chiyoda-ku Tokyo 100-8220 (JP)
(74) Representative: Hodsdon, Stephen James

(57) **Abstract**

The storage control device (1, 10) of the present invention performs data migration without any increase of the load on a NAS control unit (2, 100). A volume (330) based on a FC disk (310) and a volume (331) based on a ATA disk (311) are joined together, so as to create one virtual volume (340). An update manager (36) monitors updating of the high speed region, and creates update bitmaps. And the update manager calculates the OR of the update bitmaps, thus creating a non-updated bitmap (T2) for detecting segments which have not been updated for a predetermined time period. Based on this non-updated bitmap, a migration controller creates a migration subject bitmap (T3) by extracting segments which are to be subjects for migration. And a migration executant performs data migration for the migration subject segments one at a time or several together, based on this migration subject bitmap.

## Description

This application relates to and claims priority from Japanese Patent Application No. 2006-47799 filed on February 24, 2006, the entire disclosure of which is incorporated herein by reference.

The present invention relates to a storage control device, and to a method for migrating data using a storage control device.

Although the amount of data which must be managed in a business or the like increases day by day, generally, the frequency of use of data decreases after a fixed time period has elapsed from when it was created. Since the value of the data decreases along with the passage of time, data whose utilization value has become small ought to be transferred from a high speed storage device to a low speed storage device. This is because a high speed storage device is generally of high cost, and there is a limit to its usable capacity.

Thus, a data migration processing method has been proposed (in Japanese Patent Laid-Open Publication 2003-15917) in which files on a disk device are shifted to a magnetic tape device at a predetermined timing. With the technique described in this document, processing for creating a list for finding migration candidates, and processing for shifting only a fixed amount of the files on the disk device to the magnetic tape device based on this list which has been created are separated, and these individual processes are executed asynchronously.

With the technique described in this document, the processing for collecting file information and the processing for executing migration are separated, and thereby a reduction of the time period required for migration is envisaged. However, the greater the volume size becomes, the more time is required for performing complete searching and so on of the file tree, so that the load on the micro processor is increased.

In particular when, for example, a single virtual volume has been constructed by joining a high speed storage region and a low speed storage region, the size of this virtual volume becomes greater than that of a normal volume. And, for example, with a so called NAS (Network Attached Storage) file server, there is the problem that an excessive load is imposed on the migration processing, in order to be able to construct a file system on a virtual volume of such a great size.

The present invention has been conceived in the light of the above described problems, and an object is to provide a storage control device, and a data migration method which uses such a storage control device, which, by managing the update state of the logical storage devices which make up a virtual volume, can specify the data which is to be the migration subject in a comparatively simple manner, thus being able to migrate data efficiently. Another object of the present invention is to provide a storage control device, and a data migration method which uses such a storage control device, which, by managing the update states of the logical storage devices which make up a virtual volume by management units in a cache memory, can specify a file which is to be the migration subject indirectly without imposing any excessive load on the file controller, and can shift the data of this file which has been specified. A yet further object of the present invention is to provide a storage control device, and a data migration method which uses such a storage control device, which can perform migration of data in a comparatively simple manner without using any special commands, by creating a non-updated bitmap within a block controller and creating a migration subject bitmap within a file controller, the file controller and the block controller sharing these bitmaps and using them for copying between memories. Still further objects of the present invention will become clear from the embodiments thereof which will be described hereinafter.

In order to preferably solve the above described problems, according to a first aspect of the present invention, there is provided a storage control device comprising: a file controller; a block controller; a file manager which manages information related to various files, and processes file access requests from a host device by using a cache memory; a volume manager which joins together a first logical storage device which is provided on a first physical storage device, and a second logical storage device which is provided on a second physical storage device having a performance different from the first physical storage device, into a single virtual volume, and supplies this virtual volume to the file manager; an update manager which manages the update states of the first logical storage device and the second logical storage device in predetermined management units; a migration controller which, based on the state of updating in the management units and on the information on the various files which is managed by the file manager, specifies data which is to be a subject for migration, and issues a command for shifting this specified data between the first logical device and the second logical device; and a migration executant which, based on the command from the migration controller, shifts the data in the management units between the first logical device and the second logical device.

In an embodiment of the present invention, segment units, which are data management units for the cache memory, are used as the management units; and the update manager manages the update states of the logical storage devices with an update bitmap, by the segment units.

And, in another embodiment of the present invention, the update manager creates the update bitmap for each one of the logical storage devices at a predetermined cycle, and moreover, based on the logical sum of a plurality of the update bitmaps which are created within a predetermined time period, creates a non-updated bitmap for detecting non-updated segments which are not updated within the predetermined time period; and the migration controller, based on the non-updated bitmap and the information on the files which is managed by the file manager, creates a migration subject bitmap for specifying data which is stored in the non-updated segments as data to be a subject for migration, and, based on this migration subject bitmap, issues a command to the migration executant for shifting the migration subj ect data between the first logical storage device and the second logical storage device.

In yet another embodiment of the present invention, the migration controller enters, into the migration subject bitmap, only non-updated segments which accord with a migration policy set in advance among the non-updated segments which are indicated in the non-updated bitmap.

In still another embodiment of the present invention, the migration controller issues the command for each non-updated segment which is entered into the migration subject bitmap.

In a further embodiment of the present invention, the migration controller divides the migration subject bitmap into a plurality of segment ranges, and issues the command at a time for all of the non-updated segments included in the segment range, for each one of the segment ranges.

In a yet further embodiment of the present invention, the file controller comprises the file manager, the volume manager, and the migration controller; the block controller comprises the update manager and the migration executant; and the non-updated bitmap and the migration subject bitmap are shared by the file controller and the block controller.

In a still further embodiment of the present invention, an internal bus which is connected to the cache memory of the file controller, and an internal bus which is connected to the other memory of the block controller, are coupled together via a bridge circuit; and the non-updated bitmap and the migration subject bitmap are shared between the file controller and the block controller by using copying between the memories via the internal buses.

In an even further embodiment of the present invention, the update manager is provided within the file controller.

The features of one or more of the above embodiments may be combined.

And, according to another aspect of the present invention, there is provided a data migration method for migrating data using a storage control device which comprises a file controller and a block controller, comprising: a step, performed by the file controller, of joining together a first logical storage device which is provided on a first physical storage device, and a second logical storage device which is provided on a second physical storage device, into a single virtual volume, and supplying this virtual volume to a file manager for processing file access requests from a host device by using a cache memory; a step, performed by the block controller, of managing the update states of the logical storage devices in segment units, which are data management units for the cache memory, by creating update bitmaps at a predetermined cycle; a step, performed by the block controller, of creating and storing a non-updated bitmap for detecting non-updated segments which are not updated within a predetermined time period, based on the logical sum of a plurality of the update bitmaps which are created within the predetermined time period; a step of sharing the non-updated bitmaps between the file controller and the block controller; a step, performed by the file controller, of creating and storing a migration subject bitmap for specifying files stored in the non-updated segments as data to be a subject for migration, based on the non-updated bitmap and information on the various files which is managed by the file manager; a step of sharing the migration subject bitmap between the file controller and the block controller; a step, performed by the file controller, of prohibiting updating to the files stored in the non-updated segments which are entered into the migration subject bitmap; a step, performed by the file controller, of issuing a command to the block controller for shifting the data stored in the non-updated segments which are entered into the migration subject bitmap from the first logical storage device to the second logical storage device; a step, performed by the block controller, of shifting data stored in the first logical storage device to the second logical storage device in units of one or a plurality of segments, based on the issued command and the migration subject bitmap; and a step, performed by the file controller, of canceling the prohibition of updating for the files for which updating is prohibited, when the shifting of the data is completed.

Finally, according to yet another aspect of the present invention, there is provided a storage control device comprising: a file controller which controls file access; a block controller which controls block access; and a high speed physical storage device and a low speed physical storage device which are both used by the block controller. In this storage control device, a cache memory of the file controller and the other memory of the block controller are connected together by an internal bus of the file controller and an internal bus of the block controller being coupled together via a bridge circuit. The file controller comprises a file system, a volume manager, and a migration controller. And the block controller comprises an update manager and a migration executant.

Moreover, the file system processes file access requests from a host device using the cache memory; and the volume manager, by positioning a high speed logical storage device which is provided on the high speed physical storage device at a forward portion, and by positioning a low speed logical storage device which is provided on the low speed physical storage device at a subsequent portion, creates a single virtual volume from the high speed logical storage device and the low speed logical storage device, and supplies this virtual volume to the file manager.

The update manager manages the update states of the high speed logical storage device and of the low speed logical storage device for each segment, which is the unit of data management of the cache memory, and creates an update bitmap for each of the logical storage devices at a predetermined cycle, and moreover, based on the logical sum of the update bitmaps which are created within a predetermined time period, creates a non-updated bitmap for detecting non-updated segments which are not updated within the predetermined time period, and stores the non-updated bitmap in the other memory, with the non-updated bitmap stored in the other memory being copied from the other memory to the cache memory by being copied between the memories.

And the migration controller creates a migration subject bitmap for specifying migration subject segments which are to be migrated by querying the file system for attributes of files which are stored in the non-updated segments indicated in the non-updated bitmap which is stored in the cache memory, and stores the migration subject bitmap in the cache memory, with the migration subject bitmap stored in the cache memory being copied from the cache memory to the other memory by being copied between the memories.

Finally, the migration controller issues a command to the migration executant for shifting data which is stored in the non-updated segments entered as the migration subject segments from the high speed logical storage device to the low speed logical storage device; the migration executant, based on the issued command and the migration subject bitmap, shifts data which is stored in the high speed logical storage device to the low speed logical storage device, in units of one or a plurality of segments; and the file system prohibits updating of the migration subject data by the host device, until the shifting of the migration subject data is completed.

All or a part of the functions, means, and/or steps of the present invention may be implemented as a computer program which is executed by, for example, a micro computer. And this computer program may be distributed by being fixed on a storage medium such as, for example, a hard disk, an optical disk, a semiconductor memory, or the like. Or such a computer program may also be distributed via a communication medium such as the internet or the like.

### BRIEF DESCRIPTION OF THE DRAWINGS

Fig. 1 is an explanatory figure showing the concept of an embodiment of the present invention;
Fig. 2 is an explanatory figure showing the hardware structure of a storage control device;
Fig. 3 is an explanatory figure showing the software structure of a NAS node and the structure of hierarchical storage;
Fig. 4 is an explanatory figure showing the structure of a virtual volume;
Fig. 5 is an explanatory figure showing the structure of an i-node management region;
Fig. 6 is an explanatory figure showing the structure of an LVM definition table;
Fig. 7 is a flow chart showing the flow of processing for creating a non-updated bitmap;
Fig. 8 is an explanatory figure showing the situation when creating a migration subject bitmap from an update bitmap via a non-updated bitmap;
Fig. 9 is an explanatory figure showing a migration policy setting table;
Fig. 10 is a flow chart showing the flow of file addition processing;
Fig. 11 is a flow cart showing the flow of file update processing;
Fig. 12 is a flow cart showing the flow of data migration processing;
Fig. 13 relates to a second embodiment, and (a) shows a situation when processing a migration subject bitmap for each of a plurality of segment ranges, while (b) shows a flow chart for setting a segment range;
Fig. 14 is a flow chart showing the flow of data migration processing;
Fig. 15 relates to a third embodiment, and is a hierarchical storage explanatory figure showing that it is possible to make up several regions of a virtual volume from a plurality of logical volumes;
Fig. 16 is an explanatory figure showing the state of segment numbers, when the capacity of a region is increased; and
Fig. 17 is a flow chart showing the flow of processing when increasing the capacity of a region.

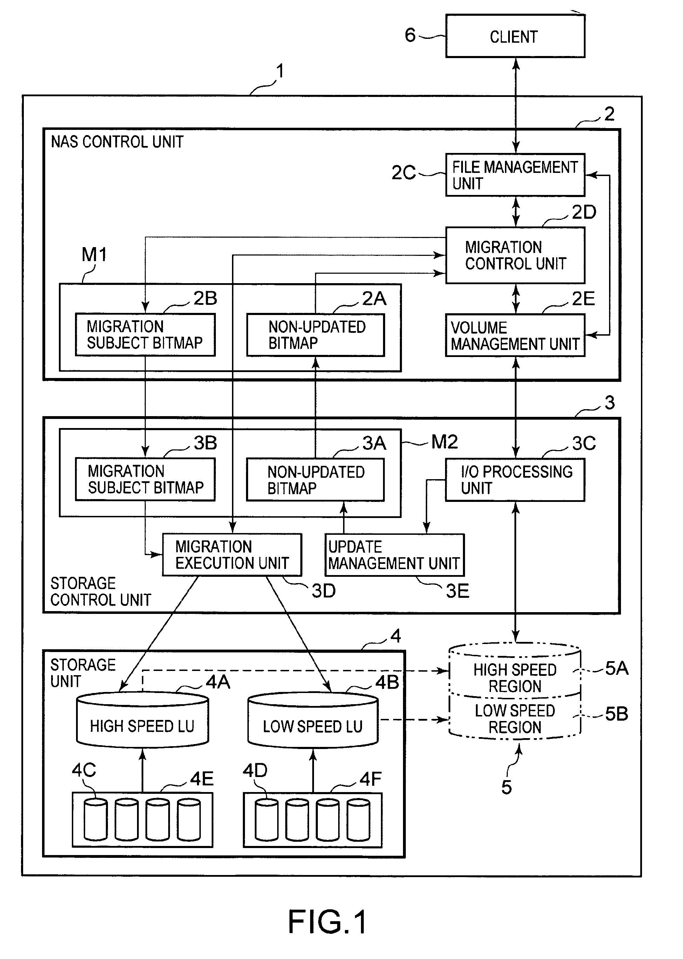

In the following, embodiments of the present invention will be explained based on the drawings. Fig. 1 is an explanatory figure showing the overall concept of these embodiments. A storage control device 1, for example, comprises a NAS control unit 2 which is an embodiment of the "file controller" of the Claims, a storage control unit 3 which is an embodiment of the "block controller" of the Claims, and a storage unit 4.

The NAS control unit 2, for example, may comprise a first memory M1, a non-updated bitmap 2A, a migration subject bitmap 2B, a file manager 2C, a migration controller 2D, and a volume manager 2E.

The first memory M1 is connected to a second memory M2 internal to the storage control unit 3, and stored contents can be transferred between these memories by copying, without the employment of any command or the like. The non-updated bitmap 2A and the migration subject bitmap 2B are both stored in the first memory M1. This non-updated bitmap 2A is created by the storage control unit 3, and also is stored in the first memory M1. And the migration subject bitmap 2B is created by the NAS control unit 2, and is also stored in the second memory M2. Each of these bitmaps 2A and 2B will be described in detail hereinafter.

The file manager 2C is an embodiment of the "file system" of the Claims. This file manager 2C is a device which performs processing of file access requests issued from a client machine 6, which is an embodiment of the "host device" of the Claims. It should be understood that the client machine 6 may also sometimes be termed the "host computer" (sometimes abbreviated as "host").

Based on a plurality of non-updated bitmaps 2A each of which has been created at a different timing, the migration controller 2D specifies non-updated segments which have not been updated even once, and thus creates the migration subject bitmap 2B. And the migration controller 2D determines the segments which are to be migrated by consulting the file manager 2C for the attribute information of the files which are stored in these non-updated segments. Moreover, the migration controller 2D requests the storage control unit 3. to perform migration for the segments which have thus been determined.

The volume manager 2E is a device which creates a virtual volume 5 having a high speed region 5A and a low speed region 5B, and supplies it to the file manager 2C. The structure of this virtual volume 5 will be further described hereinafter.

The storage control unit 3, for example, may comprise the second memory M2, the non-updated bitmap 3A, the migration subject bitmap 3B, an input and output processing unit 3C (termed an "I/O processing unit" in the figure), a migration executant 3D, and an update manager 3E.

The second memory M2, for example, may consist of another cache memory. Since an internal bus of the NAS control unit 2 and an internal bus of the storage control unit 3 are connected together, information may be shared between the second memory M2 and the first memory M1 . The non-updated bitmap 3A and the migration subject bitmap 3B are stored in the second memory M2. As described above, the contents of the non-updated bitmap 3A within the second memory M2 and of the non-updated bitmap 2A within the first memory M1 are the same, and, in the same manner, the contents of the migration subject bitmap 3B within the second memory M2 and of the migration subject bitmap 2B within the first memory M1 are the same.

By accessing a volume 4A or a volume 4B within the storage unit 4 according to a request from the NAS control unit 2, the input and output processing unit 3C can read out predetermined data from the volume 4A or 4B, and can write predetermined data into the volume 4A or 4B.

The migration controller 2D executes the migration of data in segment units, based on the migration subject bitmap 3B. The method of data migration will be described hereinafter.

The update manager 3E creates a non-updated bitmap 3A for each of the volumes 4A and 4B, based on access to the virtual volume 5 by the input and output processing unit 3C, in other words based on the state of usage of the virtual volume 5 by the client 6. This update manager 3E, for example, may create the non-updated bitmaps 3A at a predetermined time point each day. Furthermore, the update manager 3E may store in the second memory M2 only non-updated bitmaps 3A which have been created within a predetermined time period, and may also delete from within the second memory M2 non-updated bitmaps 3A which have exceeded that predetermined time period.

The update manager 3E may also, for example, be used for a volume replication function or a snapshot creation function. Furthermore, for example, if snapshot creation is performed by the NAS control unit 2, the update manager 3E may also be provided internally to the NAS control unit 2.

The storage unit 4, for example, may comprise a plurality of disk drives 4C, 4D, .... A first disk drive 4C may, for example, consist of a comparatively high speed device like a FC (Fiber Channel) disk. And a second disk drive 4D may, for example, consist of a comparatively low speed device like an ATA (AT attachment) disk. In this case, the disk drive 4C is of higher speed and moreover higher performance than the disk drive 4D. It should be understood that these disk drives 4C and 4D are not limited to being hard disk drives. For example, it would also be possible to utilize various other types of device, such as a semiconductor memory drive, an optical disk drive, an opto-magnetic disk drive, or the like.

For example, a first physical storage device 4E may be created from storage regions which are present on one or a plurality of the first disk drives 4C. Although the details differ according to the RAID (Redundant Array of Independent Disks) structure level, the physical storage device 4E is created by assembling a plurality of storage regions while incorporating redundancy. This storage device 4E will be termed the first physical storage device 4E. And, for example, one or a plurality of first logical storage devices 4A may be created from this first physical storage device 4E.

In the same manner as described above, a second physical storage device 4F is created from storage regions which are present on one or a plurality of the second disk drives 4D. And one or a plurality of second logical storage devices 4B may be created based on this second physical storage device 4F. These logical storage devices 4A and 4B may also be termed logical volumes (Logical Units).

A virtual volume 5 is constituted by virtually coupling together the first logical storage device 4A and the second logical storage device 4B. This virtualization is performed by the volume manager 2E. The file manager 2C is able to recognize the structure of this virtual volume 5 via the volume manager 2E.

The virtual volume 5 may broadly be considered as being separated into a high speed region 5A which is positioned at its forward portion, and a low speed region 5B which is positioned at its subsequent portion. The high speed region 5A corresponds to the first logical storage device 4A, which is the high speed logical storage device. And the low speed region 5B corresponds to the second logical storage device 4B, which is the low speed logical storage device. In the high speed region 5A, there are stored groups of data whose information value is high, since they are currently being used by the client 6; while, in the low speed region 5B, there are stored groups of data whose information value is lower.

In this manner, the virtual volume 5 is actually built up from the logical storage devices 4A and 4B which are of a plurality of types whose individual performance is different, but the client 6 does not recognize the detailed structure of the virtual volume 5 to this extent; he can utilize it as a single volume.

Next, the operation of this storage control device 1 will be explained. When a request arrives from the client 6 to read out some file which is stored in the virtual volume 5, the NAS control unit 2 specifies the storage address and the like provided in the logical storage device 4A or 4B, and requests the storage control unit 3 to read out that file. And the input and output processing unit 3C of the storage control unit 3 reads out the data which corresponds to that file from the appropriate one of the logical storage devices 4A and 4B, and stores it in the first memory M1 within the NAS control unit 2.

When a request arrives from the client 6 to write some file (file data) into the virtual volume 5, the NAS control unit 2 specifies a write address and the like in the logical storage device 4A, and requests the storage control unit 3 to write that file. And the input and output processing unit 3C stores the file data in the logical storage device 4A.

The update manager 3E monitors the writing of data into the high speed region 5A (in other words, into the logical storage device 4A) and, for the segments which have been updated, sets an update flag to "1". A segment is the unit for managing data in the cache memory (in this example, the second memory M2). The update manager 3E creates an update bitmap by setting, for each segment of the first logical storage device 4A, its update flag for identifying whether it has been updated or not. And the update manager 3E is able to manage the update state of the second logical storage device 4B in the same manner. In this way, the update manager 3E manages the update state for each of the segments of the logical storage devices 4A and 4B, for example every day. It should be understood that the data management units in the cache memory are not limited to being segments; it would also be acceptable to manage them in units of some other size (such as block units or other kinds of data entities). Each of the segments may be made up of a plurality of blocks.

When update bitmaps have been accumulated over a predetermined time period, for example over one week or the like, the update manager 3E detects the segments which have not been updated within a predetermined period by calculating the OR of these update bitmaps. Here, the segments which have not been updated within this predetermined time period will be termed non-updated segments. The update manager 3E creates the non-updated bitmap 3A by calculating the OR of the update bitmaps, and stores it in the second memory M2. This non-updated bitmap 3A is also stored in the first memory M1 by being copied between the memories. It should be understood that it would also be acceptable for the NAS control unit 2 to create the non-updated bitmap 2A based on the update bitmaps, and to copy this non-updated bitmap 2A into the second memory M2.

Based on the non-updated bitmap stored in the first memory M1, the migration controller 2D can query the file manager 2C for the attributes of the data which is stored in the non-updated segments. The file manager 2C specifies the files in which all the data, or a portion thereof, within the non-updated segments which have been queried is stored, and replies with the attributes of those files which have been specified. As such attributes, for example, there may be cited the file size, the owner of the file, the day and time of reference to the file, or the like.

The migration controller 2D determines which segments, among the non-updated segments which are entered into the non-updated bitmap 2A, are to become subj ects of migration, based on the attributes of the data (the file data) stored in these non-updated segments. For example, if a segment has been referred to recently, even if it is a segment which has not been updated within the predetermined time period, then the migration controller 2D may eliminate it from the subjects of migration.

It should be understood that alternatively, irrespective of the attributes of the data, the migration controller 2D may select all of the non-updated segments as subjects for migration. Among the non-updated segments which are entered into the non-updated bitmap 2A, which ones are to be selected as segments which are subjects for migration, may be determined according to a migration policy. And such a migration policy may also be defined by the user himself.

By doing this, the bitmap 2B which specifies the segments which are to be subjects for migration is created by the migration controller 2D. This migration subject bitmap 2B is also copied into the second memory M2.

Based on the migration subject bitmap 3B within the second memory M2, the migration executant 3D executes data migration of the migration subjects by one segment at a time, or by a plurality at a time all together. In other words, the migration executant 3D copies the data which is stored in the segments which are subjects for migration from the first logical storage device 4A into the second logical storage device 4B. By doing this, in the virtual volume 5, data in its high speed region 5A is shifted to its low speed region 5B, so that the vacant capacity of the high speed region 5A is increased. And new file data of which the information is high is written into the high speed region 5A (the first logical storage device 4A) whose vacant capacity has thus been increased.

By having this type of structure, this embodiment of the present invention provides the following beneficial effects. In this embodiment, the files themselves are not directly shifted in units of files, but, rather, the file data which is stored in the logical storage devices 4A, 4B is shifted by segment unit, so that, as a result, shifting of file units is implemented in a pseudo manner. Accordingly it is not necessary to perform shifting by one file at a time by searching through the entire file tree to specify the subjects for migration, as was the case in the prior art. Due to this, it is possible to alleviate the load on the NAS control unit 2 for specifying the subjects for migration, and it is possible to allocate the computer resources of the NAS control unit 2 to proper NAS service, so that the convenience of use is also enhanced.

Since, in this embodiment, whether or not to perform shifting is decided in units of segments, and the data is shifted in units of segments, therefore it is possible to shorten the time period for performing updating exclusion control for maintaining matching between before the shifting and after the shifting. Accordingly it is possible to utilize the data which is the subject of shifting quickly, so that the convenience of use is enhanced.

In this embodiment, the processing for specifying the data which is to be subject to migration is divided into two processes, i.e. the processing in which the non-updated segments are detected by the storage control unit 3, and the processing in which the migration subject segments are selected by the NAS control unit 2 from among the non-updated segments; and this process for detecting the non-updated segments and this process for selection of the migration subject segments are executed asynchronously. Accordingly, it is possible for the processing for specification of the subjects for migration to be performed by cooperation of the NAS control unit 2 and the storage control unit 3, so that it is possible to prevent the entire load from being concentrated on the NAS control unit 2.

In this embodiment, the NAS control unit 2 specifies the data which is to be subject to migration, and the actual data migration is performed by the storage control unit 3. Accordingly, it is necessary for the NAS control unit 2 to read out the data in the files, but it is not necessary for the NAS control unit 2 to write this read out data to the logical storage device 4B which is the destination for shifting. In other words, the migration of data is not performed via the NAS control unit 2, but rather is performed within the storage control unit 3. Due to this, the load on the NAS control unit 2 related to data migration can be reduced by a further level.

In this embodiment it is arranged for the update manager 3E, which is already present, to be utilized for snapshot creation and the like, and for it to perform the pre-processing for specifying the subjects for migration (i.e. for detection processing of the non-updated segments). Accordingly, there is no great change in the structure of the storage control unit 3, so that it is possible to implement data migration in units of segments.

In this embodiment, it is arranged for the non-updated bitmaps 2A and 3A and the migration subject bitmaps 2B and 3B to be shared in common between the first memory M1 in the NAS control unit 2 and the second memory M2 in the storage control unit 3. Accordingly, it is not necessary to perform any information exchange, for example by using commands, and thus it is possible to simplify the structure for sharing this information. And it is possible for the non-updated bitmaps 2A and 3A and the migration subject bitmaps 2B and 3B to be shared in common, without imposing any burden on the control units 2 and 3.

In this embodiment, it is arranged for the update bitmaps to be kept within the storage control unit 3, and for the non-updated bitmap 3A (2A) to be created from these update bitmaps and shared in common with the NAS control unit 2. Accordingly, it is possible to utilize the storage region within the first memory M1 in an efficient manner. It should be understood that it would also be acceptable to arrange to construct the non-updated bitmap 2A within the NAS control unit 2. In the following, this embodiment of the present invention will be explained in detail.

### EMBODIMENT 1

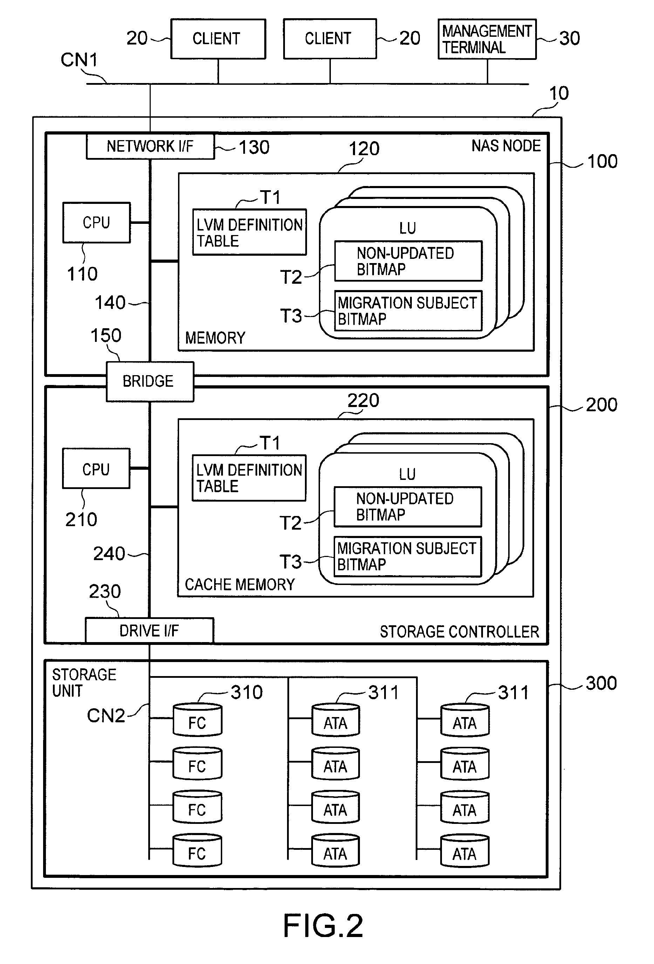

Fig. 2 is an explanatory structural figure showing the overall structure of the storage control device 10. First, to explain the correspondence relationship between this figure and Fig. 1: the storage control device 10 in Fig. 2 corresponds to the storage control device 1 in Fig. 1, the NAS node 100 in Fig. 2 corresponds to the NAS control unit 2 in Fig. 1, the storage controller 200 in Fig. 2 corresponds to the storage control unit 3 in Fig. 1, the storage unit 300 in Fig. 2 corresponds to the storage unit 4 in Fig. 1, and the client 20 in Fig. 2 corresponds to the client 6 in Fig. 1.

The storage control device 10 comprises, for example, the NAS node 100, the storage controller 200, and the storage unit 300. The storage control device 10 is connected to one or a plurality of client machines 20 and to a management terminal 30, via a communication network CN1 such as, for example, a LAN or the like. The client machines 20 are computer devices for performing input and output of files by using the storage control device 10. The management terminal 30 is a computer device for managing the storage control device 10. This management terminal 30, for example, may command structural changes of the storage control device 10, or may check various states of the storage control device 10.

The NAS node 100, for example, may comprise a micro processor 110 (hereinafter termed a "processor"), a memory 120, a network interface unit 130 (hereinafter the term "interface" is sometimes abbreviated as "I/F"), an internal bus 140, and a bridge circuit 150.

The processor 110 is a device for reading in a predetermined computer program and implementing predetermined functions. This processor 110, apart from implementing data processing services as a NAS, also performs data migration processing as will be described hereinafter.

The memory 120 may be, for example, a RAM (RandomAccess Memory) or a flash memory. A LVM definition table T1, a non-updated bitmap T2, and a migration subject bitmap T3 are stored in the memory 120. The memory 120 is connected to the internal bus 140, along with the processor 110 and so on. Furthermore, the memory 120 is also connected to an internal bus 240 of the storage controller 200 via the internal bus 140 and the bridge circuit 150. Accordingly, the memory 120 is also connected to a cache memory 220 within the storage controller 200, and thus, without employing any commands, the various types of information T1 through T3 can be shared in common between the memories 120 and 220.

The network I/F unit 130 is a device for performing communication with the clients 20 and the management terminal 30 via the communication network CN1. The bridge circuit 150 is a circuit for connecting between the internal bus 140 of the NAS node 100 and the internal bus 240 of the storage controller 200.

The storage controller 200, for example, may comprise a processor 210, a cache memory 220, a drive I/F unit 230, and an internal bus 240. The processor 210 reads in a predetermined computer program and implements predetermined functions. As such predetermined functions, there may be cited input and output processing of block units of data, update management processing, migration execution processing, and the like.

The cache memory 220 is a device for storing user data which is used by the clients 20, various types of control information, and management information. In this cache memory 220, just as in the above described memory 120, there are stored each of a LVM definition table T1, a non-updated bitmap T2, and a migration subject bitmap T3.

The storage unit 300, for example, may be structured as a disk array enclosure, and it comprises a plurality of disk drives 310, 311. The first type of disk drives 310, for example may be drives of comparatively high speed and comparatively high performance, like FC disks or the like. And the second type of disk drives 311, for example may be drives of comparatively low speed, like ATA disks or the like.

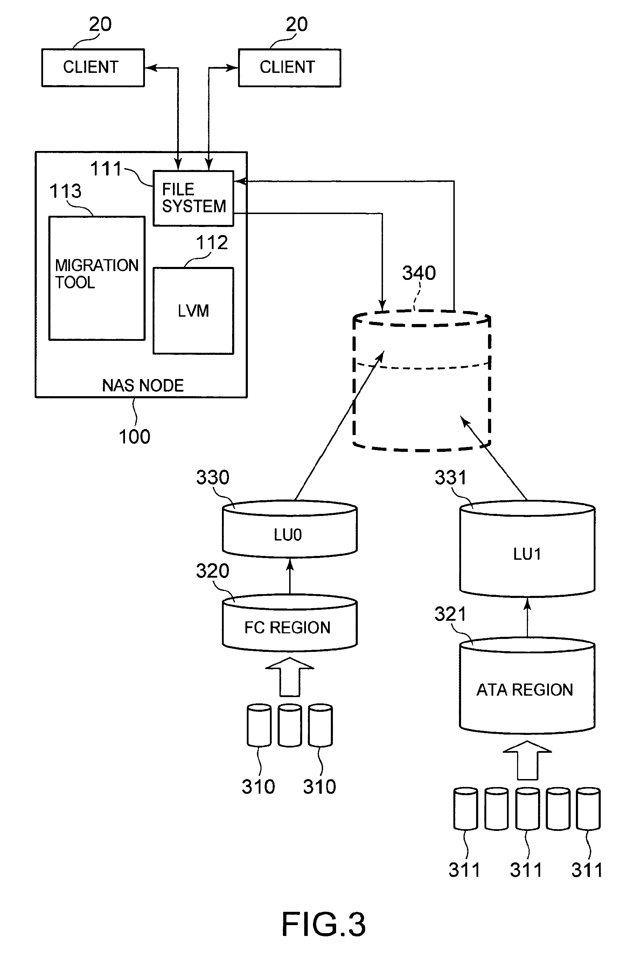

In this embodiment, new user data is stored within the logical storage device 330 (refer to Fig. 3) which is made up from the FC disks 310, while old data whose information value has decreased is stored within the logical storage device 331 (refer to Fig. 3) which is made up from the ATA disks 311. Since it is not possible immediately to delete this old data whose information value has decreased, the number of the ATA disks 311 which are provided to the storage unit 300 is greater than the number of FC disks 310.

Fig. 3 is an explanatory figure schematically showing the software structure of the NAS node 100 and the structure of the hierarchical storage. This NAS node 100, for example, may comprise a file system 111 (the OS of the NAS), a logical volume manager 112 (abbreviated as "LVM"), and a migration tool 113.

The file system 111 is a device for managing file groups and supplying file sharing services to the clients 20. The LVM 112 is a device for managing the virtual volume 340. And the migration tool 113 is a device for performing migration control.

The hierarchical storage supplied by this storage control device 10 will now be explained. A single virtual volume 340 is constituted by logically coupling together the first logical storage device 330 and the second logical storage device 331.

The first logical storage device 330 is founded on the first disk drives 310 (hereinafter also sometimes termed the "FC disks 310") . A first physical storage device 320 (in the figure, the "FC region 320") is formed by virtualizing the storage region which is supplied by one or a plurality of FC disks 310 based on a RAID structure. The first logical storage device 330 is created from all or a part of the storage region of this first physical storage device 320.

In the same manner, the second logical storage device 331 is founded on the second disk drives 311 (hereinafter also sometimes termed the "ATA disks 311") . A second physical storage device 321 (in the figure, the "ATA region 321") is formed by virtualizing the storage region which is supplied by one or a plurality of ATA disks 311 based on a RAID structure. The second logical storage device 331 is created from all or a part of the storage region of this second physical storage device 321. It should be understood that sometimes, in the following explanation, each of these logical storage devices 330, 331 is termed the logical volume 330, 331.

As described above, the virtual volume 340 is constituted so that the logical volume 330 is arranged at its forward portion, while the logical volume 331 is arranged at its subsequent portion. The term "forward portion" refers to a region of the virtual volume 340 close to its leading address, while the term "subsequent portion" refers to its other region which continues on from that forward portion.

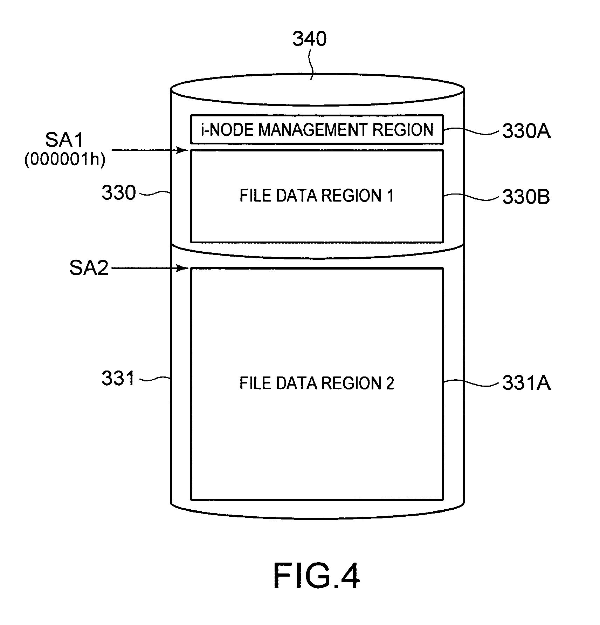

Fig. 4 is an explanatory figure schematically showing the structure within the virtual volume 340. As described above, the logical volume 330 which is founded on the FC disks 310 corresponds to the forward portion of this virtual volume 340. In this logical volume 330 there are provided an i-node management region 330A and a first file data region 330B. The i-node management region 330A will be further described in detail hereinafter. The first file data region 330B is a storage region for storing user data. User data which is used by the clients 20 and whose information value is comparatively high is stored in this first file data region 330B.

The logical volume 331 which is founded on the ATA disks 311 corresponds to the subsequent portion of the virtual volume 340. In this logical volume 331 there is provided a second file data region 331A. User data whose information value has decreased is stored in this second file data region 331A.

We suppose that the leading address of the first file data region 330B is SA1, while the leading address of the second file data region 331A is SA2. The LVM 112 recognizes the structure of the virtual volume 340, and ascertains to which address space of which one of the logical volumes 330 and 331 the address space of the virtual volume 340 is actually allocated. The LVM 112 manages the logical block addresses (LBAs) and the segment numbers so that, within the virtual volume 340, the address space of its subsequent portion continues on from the address space of its forward portion. It should be understood that the LVM 112 may also be provided with a snapshot function or the like. By a snapshot is meant an image of the contents of storage, frozen at an indicated time point.

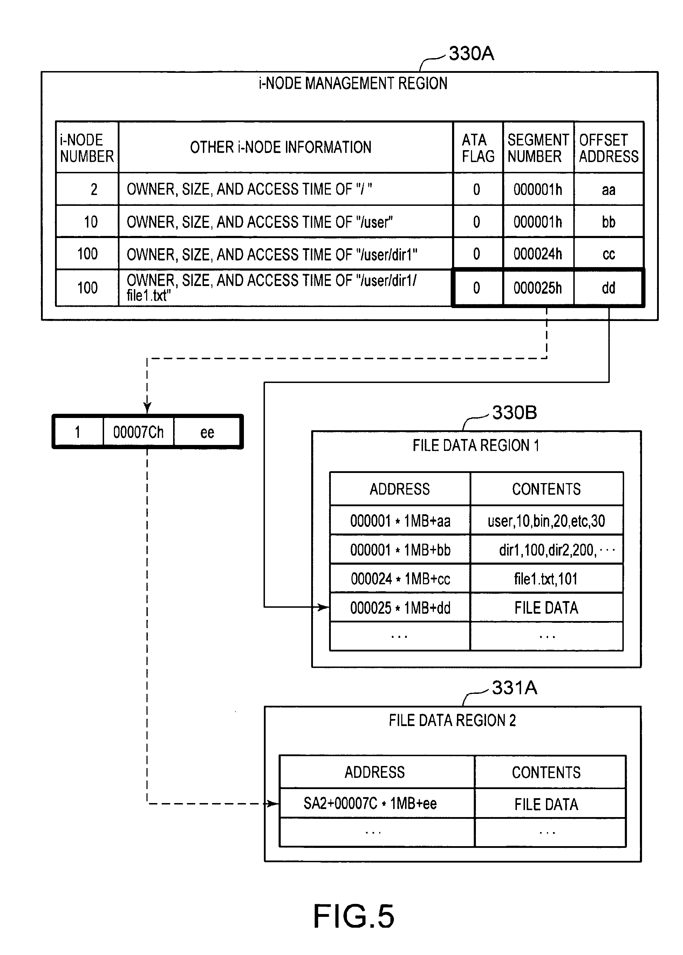

Fig. 5 is an explanatory figure showing the structure of the i-node management region 330A and so on. Information for managing the file groups which are stored in the virtual volume 340 is stored in this i-node management region 330A. For example, i-node numbers, other i-node information, ATA flags, segment numbers (sometimes in the figures "number" is written as "#"), offset addresses, and the like are stored in the i-node management region 330A.

By an i-node number is meant a number for identifying a file in the file system. The position at which each file (user data set) in the virtual volume 340 is stored is specified by an i-node number.

By other i-node information is meant information which gives attributes of the files which are specified by the i-node numbers (The i-node is sometimes assigned to the directory). As such file attribute information, for example, the name of the owner of the file, the file size, the access time and so on may be cited.

By an ATA flag is meant information for identifying on which of the logical volumes 330 and 331 the file which is specified by this i-node number is stored. In this embodiment, when data migration is performed, data within the high speed logical volume 330 is transferred to the low speed logical volume 331. If some file data is stored in the logical volume 330, its ATA flag is set to "0". On the other hand, if some file data is stored in the logical volume 331, its ATA flag is set to "1". Accordingly, the ATA flag serves a function of specifying the logical volume in which the data is stored, and also serves a function of identifying whether or not migration has been performed.

The segment number and the offset address are address information for showing where the file specified by the i-node number is stored. In this embodiment, the storage address of the data of the file are specified by the ATA flag and the segment number and offset address. As described above, by the value of the ATA flag, it is possible to specify the logical volume in which the data of the file is stored. And, by the segment number and the offset address, it is possible to specify where in this logical volume the data of the file is stored.

It should be understood that the segment numbers which are managed by the i-node management region 330A and the segment numbers of each of the bitmaps T2, T3, and T4 agree with one another perfectly. In other words, the segment numbers which are managed by the NAS node 100 and the segment numbers which are managed by the storage controller 200 agree with one another, and it is arranged to perform data shifting in units of segments only by notifying the segment numbers and so on from the NAS node 100 to the storage controller 200.

The value obtained by multiplying the segment number by the segment size (for example 1MB) gives the storage address within the logical volume specified by the ATA flag. In the example shown in Fig. 5, for the root directory of the i-node number "2", from the facts that its ATA flag is "0", its segment number is "000001h", its segment size is 1MB, and its offset address is "aa", it is seen that this root directory is stored with its leading address being at a position which is offset by just "aa" from the head of the segment "000001h" within the logical volume 330. In other words, this root directory is stored in the first file data region 330B.

In the same manner, for the file "/usr/dir1/file1.txt" which has the i-node number "100", from the facts that its ATA flag is "0", its segment number is "000025h", and its offset address is "dd", it is seen that the data of this file is stored at a location which is separated from the leading address SA1 of the first file data region 330B by just 1MB × 25 + dd. If this file "/usr/dir1/file1.txt" is to be shifted from the logical volume 330 to the logical volume 331, then the ATA flag of this file is set to "1". Furthermore, the segment number and the offset address of this file are respectively changed to the segment number and the offset address of the copy destination.

The leading address of the logical volume 331 is SA2. Accordingly, storage addresses are specified within the second file data region 331A by SA2 + segment number × segment size + offset address.

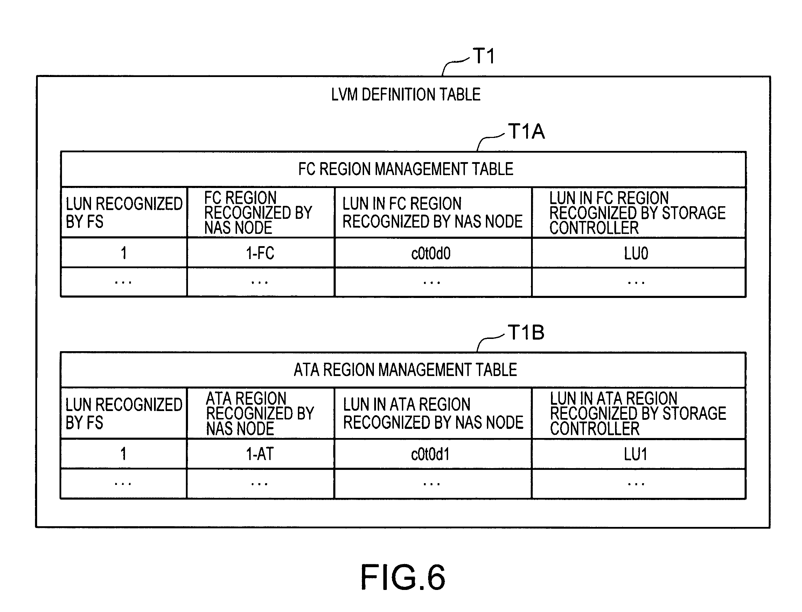

Fig. 6 is an explanatory figure showing the structure of the LVM definition table T1. This LVM definition table T1 is a device for managing the virtual volume 340. As described above, the NAS node 100 and the storage controller 200 each stores an LVM definition table T1 which has the same contents. This LVM definition table T1 comprises, for example, a FC region management table T1A and an ATA region management table T1B. In Fig. 6, the file system 111 is abbreviated as "FS".

The FC region management table T1A is a table for managing the FC region included in the virtual volume 340. This table T1A comprises, for example, entries each consisting of a LUN (Logical Unit Number) which is recognized by the file system 111, information for identifying the FC region which is recognized by the NAS node 100, a LUN in the FC region which is recognized by the NAS node 100, and a LUN in the FC region which is recognized by the storage controller 200, in correspondence with one another.

By a LUN which is recognized by the file system 111 is meant a LUN which is set in the virtual volume 340. Although in Fig. 3 only one virtual volume 340 is shown, in this embodiment, it is possible to set a plurality of virtual volumes 340.

By information for identifying the FC region which is recognized by the NAS node 100 is meant information for identifying the FC region portion of the virtual volume 340, in other words, the forward portion which corresponds to the logical volume 330.

By a LUN in the FC region which is recognized by the NAS node 100 is meant information for accessing a logical volume 330 which corresponds to the FC region which constitutes the forward portion of the virtual volume 340. The logical volumes 330 and 331 have two types of LUNs. One of these LUNs is a value which is recognized from the NAS node 100, while the other is a value which is recognized from the controller 200. A LUN in the FC region which is recognized by the NAS node 100 may, for example, be expressed in the format "c#t#d#". Here, "c#" shows the number of the drive I/F, and "t#" shows the target number of the SCSI (Small Computer System Interface). Moreover, "d#" shows the value of the LUN.

And by a LUN in the FC region which is recognized by the storage controller 200 is meant, as per the above, a LUN which is used within the storage controller 200.

The ATA region management table T1B is a table for managing the ATA region included in the virtual volume 340. This ATA region management table T1B is structured in the same manner as the above described FC region management table T1A. In other words, the ATA region management table T1B comprises, for example, entries each consisting of a LUN (Logical Unit Number) which is recognized by the file system 111, information for identifying the ATA region which is recognized by the NAS node 100, a LUN in the ATA region which is recognized by the NAS node 100, and a LUN in the ATA region which is recognized by the storage controller 200, in correspondence with one another.

As will be clear from the structure of the LVM definition table T1, with the virtual volume 340 of this embodiment, the structure of its FC region and its ATA region may change. In other words, in this virtual volume 340, it is possible to make the FC region of its forward portion corresponding to a plurality of logical volumes 330 respectively founded on the FC disks 310. Moreover, it is possible to make the ATA region which is the subsequent portion of this virtual volume corresponding to a plurality of logical volumes 331 respectively founded on the ATA disks 311.

In other words, as shown in the embodiment which will be described hereinafter, it is possible to join a plurality of the logical volumes 330 together and thus to extend the FC region within the virtual volume 340. Furthermore, it is also possible to join a plurality of the logical volumes 331 together and thus to extend the ATA region within the virtual volume 340.

When extending the size of the FC region or of the ATA region, the segment numbers are managed so that, within each of these regions, the segment numbers are consecutive. In other words, if the FC region within the virtual volume 340 is made up by joining together some logical volume 330(1) and some other logical volume 330(2), then the next value after the last segment number of the logical volume 330(1) is taken as the head segment number of the logical volume 330(2).

Provided that the segment numbers are consecutive within each of the FC region and the ATA region, this will be sufficient; it is not necessary for the segment numbers to be consecutive between the FC region and the ATA region. The bitmaps T2 through T3 are also each managed by units of regions.

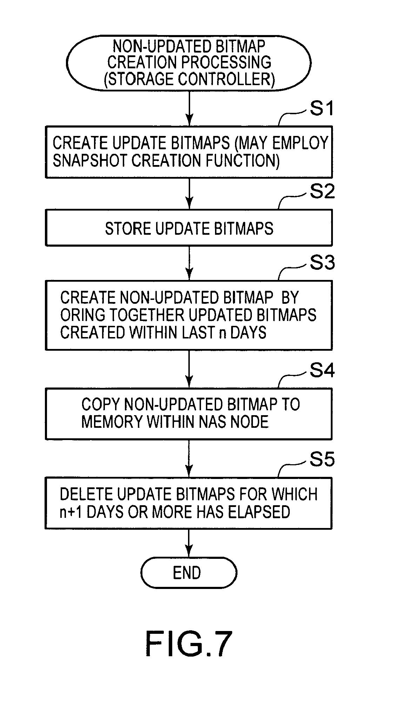

Next, the operation of this storage control device 10 will be explained. First, Fig. 7 is a flow chart showing the flow of processing for creating the non-updated bitmap T2. This processing is executed by the storage controller 200. It should be understood that, in the figures, "step" is abbreviated as "S". Furthermore, each of the following flow charts only shows a summary of the actual processing to the extent which is necessary to explain and implement the present invention, and they are different from the program actually employed.

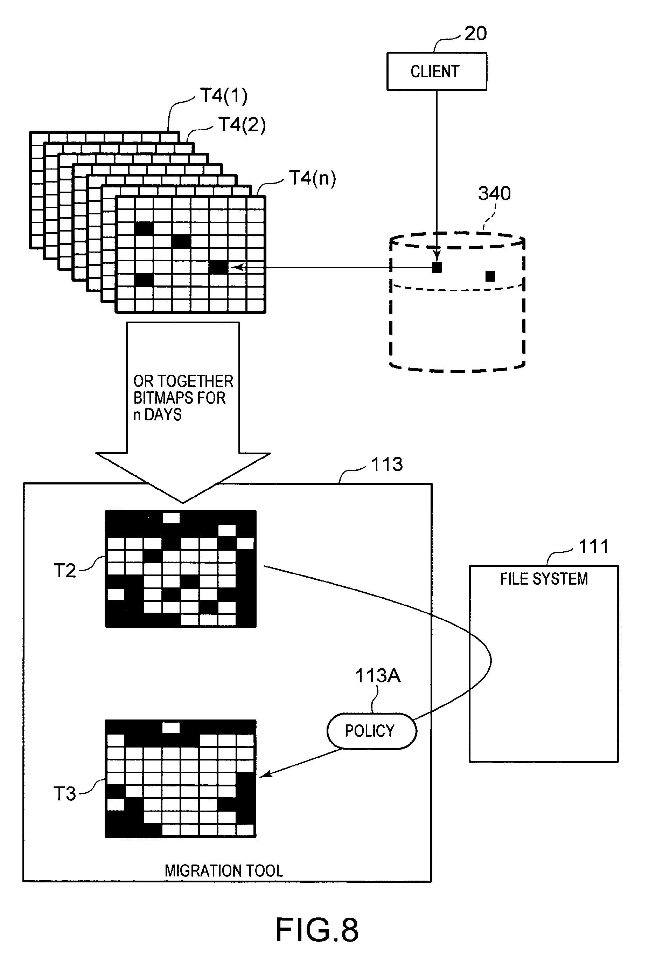

Fig. 8 is an explanatory figure schematically showing a flow of processing shown in Fig. 7. In the following, the processing for creation of the non-updated bitmap will be explained while referring appropriately to Fig. 7 and Fig. 8. The storage controller 200 creates (in a step S1) the update bitmap T4 which manages the update step of the virtual volume 340 at a predetermined cycle (for example, once each day).

This update bitmap T4 is generated by setting the value "1" or "0" for each segment within the FC region and the ATA region. If the update flag is set to "1", this means that this segment has been updated. If the update flag is set to "0", this means that this segment has not been updated. The storage controller 200 sets the update flag to "1" for segments which have been updated by the client 20.

The update bitmap T4 which has been created in this manner is stored within the cache memory 220 (in a step S2). In Fig. 8, the numbers in the parentheses () which are appended to the symbols "T4" show the order of creation (the day of creation). Every time n days, which is a predetermined time period, elapses, the storage controller 200 performs a calculation by ORing together, for each segment, the update bitmaps T4(1) through T4(n) which have been created during those n days, and thus creates the non-updated bitmap T2 (in a step S3).

In this non-updated bitmap T2, if some segment has been updated even once within the period of n days, the non-updated flag for this segment is set to "0". If another segment has not been updated even once within the period of n days, then the non-updated flag for this segment is set to "1".

The non-updated bitmap T2 which has been created in this manner is stored in the cache memory 220, and is also copied (in a step S4) from the cache memory 220 to a memory 120 within the NAS node 100. The storage controller 200 may deletes from the cache memory 220 the old update bitmaps T4 for which n+1 days or more has elapsed (in a step S5) .

Fig. 8 will now be referred to. Although the details thereof will be explained hereinafter along with other flow charts, based on the non-updated bitmap T2 which has been stored in the memory 120, the migration tool 113 queries the file system 111 for the attributes of the data stored in the non-updated segments. The migration tool 113 decides whether or not the attributes of the data accord with a policy 113A which has been set in advance.

The migration tool 113 selects a non-updated segment which accords with the policy 113A as a segment which is to be a migration subject, and sets "1" for this segment which is a migration subject. By doing this, the migration subject bitmap T3 is created, and is stored in the memory 120. And this migration subject bitmap T3 is copied from the memory 120 to the cache memory 220.

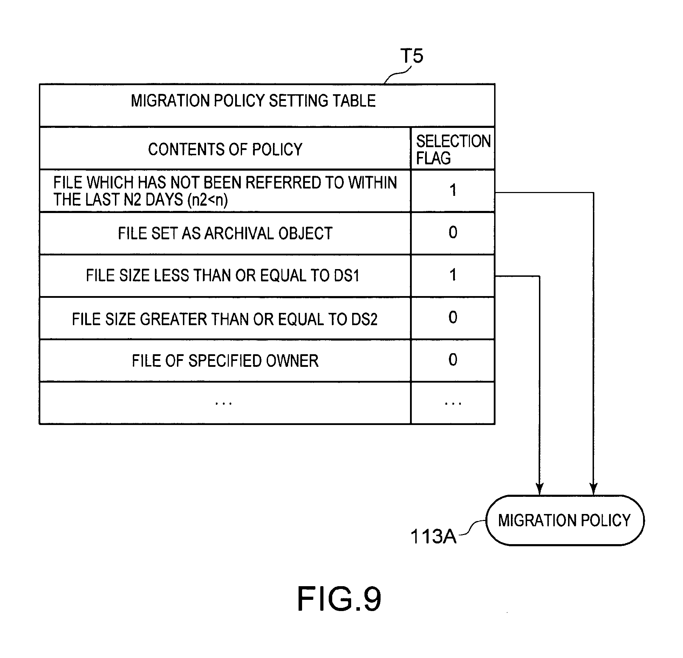

Fig. 9 is an explanatory figure showing an example of a migration policy setting table T5 which is used for setting the migration policy 113A. This migration policy setting table T5 may comprise, for example, one or a plurality of items of policy contents which have been entered in advance, and selection flags which show whether or not the corresponding policies are selected.

As a policy contents item, for example, there may be cited "shift files which have not been referred to within the last n2 days" (where n2≤n), "shift files which have been set in advance as archival objects", "shift files whose file size is less than or equal to DS1", "shift files whose file size is greater than or equal to DS2", "shift files of a specific owner set in advance", or the like. The contents of a policy may be set in advance, or may also be permitted to be set by the user himself. Furthermore, it would also be possible to arrange for it to be possible to set the contents of a policy from a client 20 or from the management terminal 30.

The user may select any one or a plurality of desired policies from the policies which are entered in the migration policy setting table T5. For the policy or policies which have been selected by the user, their selection flag or flags are set to "1". The migration policy 113A is created by appending together the policies which have been selected. It should be understood that the user does not absolutely need to select one or more policies. If not even one policy is selected, all of the non-updated segments within the non-updated bitmap T2 become subjects for data migration.

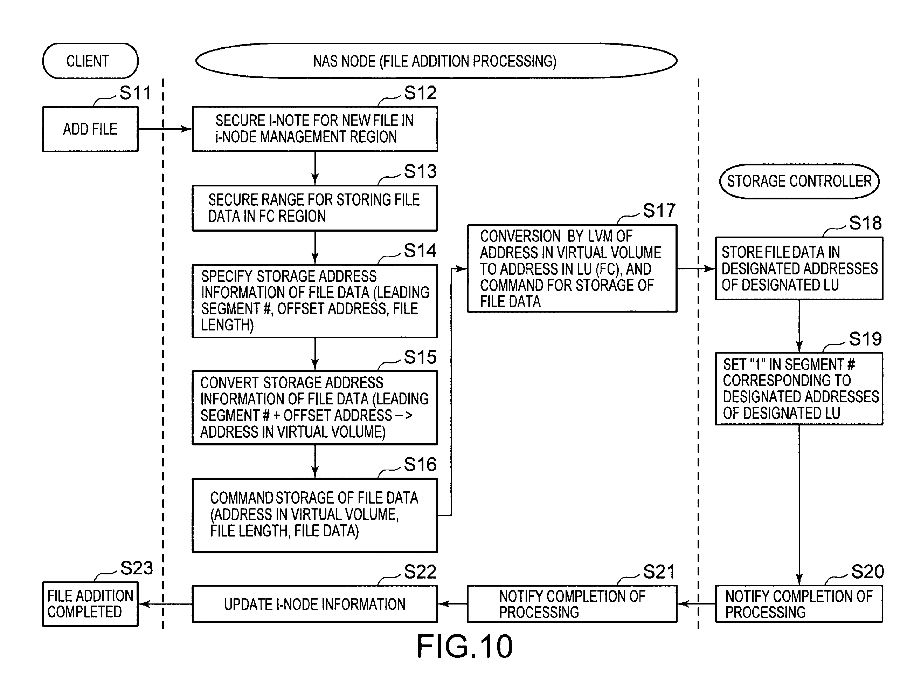

Fig. 10 is a flow chart showing the flow of processing when adding a new file to a file tree which is provided within the virtual volume 340. When a client 20 commands a file to be added (in a step S11), the file system 111 of the NAS node 100 secures (in a step S12) an i-node in the i-node management region 330A for this file which is to be newly added.

The file system 111 secures (in a step S13) a range (storage region) within the FC region in the virtual volume 340 in which the data of the file which is to be newly added is to be stored. In other words, according to the size of the data which must be stored, the file system 111 secures only the required vacant segments, or unused regions within used segments, in the FC region of the virtual volume 340.

Next, the file system 111 specifies (in a step S14) information (in the figure, this means storage address information) related to the range in which the file data is stored. In other words, the file system 111 specifies each of the number and offset address of the leading segment in which the file data is stored, and its file size.

Next, the file system 111 converts the storage address information which was specified in the step S14 into storage address information in the virtual volume 340 (in a step S15), and commands the LVM 112 to store the file data (in a step S16). In this storage command, there are included the leading address information of the file data in the virtual volume 340, and the file size and the file data.

By referring to the LVMdefinition table T1, the LVM 112 converts the storage address information in the virtual volume 340 into information for being stored in the logical volume 330, and commands the storage controller 200 to store the file data (in a step S17) . In this command, there are included information which specifies the logical volume 330, the leading address information of the file data in the logical volume 330 of the storage address, the file size and the file data.

On receipt of this command from the LVM 112, the storage controller 200 stores the file data which has been received from the LVM 112 in the predetermined region which has been commanded from the LVM 112 (in a step S18). And, for the segments in which the file data has been stored, the storage controller 200 sets the update flags of the update bitmap T4 to "1" (in a step S19), and notifies the LVM 112 of the completion of processing (in a step S20) .

On receipt of the completion of processing from the storage controller 200, the LVM 112 notifies the file system 111 of the completion of processing (in a step S21). On receipt of this notification from the LVM 112 to the effect that the file data has been stored normally, the file system 111 updates (in a step S22) the i-node information relating to this file data which has been newly written. By the completion reply from file system 111 to a client 20 or by other means , the client 20 recognizes the fact that the addition of the file has been completed (in a step S23) .

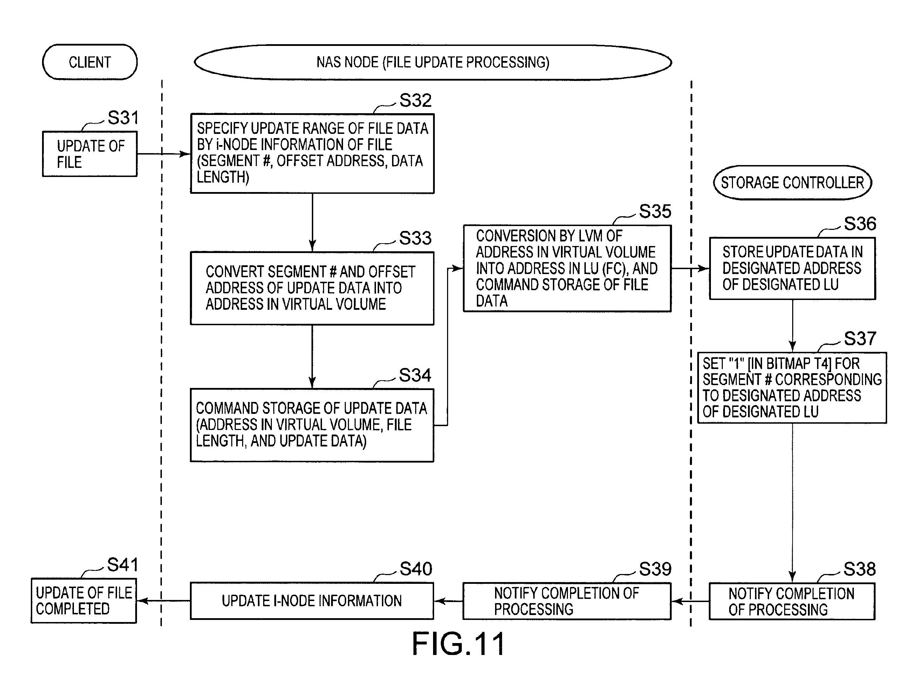

Fig. 11 is a flow chart showing the flow of processing when updating the file in the virtual volume 340. Before this file updating, the client 20 reads out the subject file data from the virtual volume 340, partially rewrites this file or the like, and commands the file to be updated. Since the processing for reading out the file data can be easily understood from the processing for updating the file, explanation thereof will be curtailed.

When the client 20 requests updating of the file (in a step S31), the file system 111 specifies the update range of file data (in a step S32) based on the i-node information of the file whose updating has been requested. In the following, the data in the range within the file data which is updated will be termed the update data. The file system 111 converts (in a step S33) the segment number and the offset address of the update data into address information in the virtual volume 340, and commands the LVM 112 to store the update data (in a step S34). In this command, there are included the leading address information of the update data in the virtual volume 340, and the data size and update data.

Based on this command from the file system 111, the LVM 112 converts the address information in the virtual volume 340 to address information in the logical volume 330, and commands the storage controller 200 to store the update data (in a step S35). In this command, there are included the leading address information of the update data in the logical volume 330, and the data size and update data.

According to this command from the LVM 112, the storage controller 200 stores the update data in the designated address of the logical volume 330 (in a step S36). And, for the segments in which the update data has been stored, the storage controller 200 set the update flags of the update bitmap T4 to "1" (in a step S37), and notifies the LVM 112 of the completion of processing (in a step S38).

On notification from the storage controller 200 of the completion of processing, the LVM 112 notifies the file system 111 of the completion of processing (in a step S39). On receipt of the notification of the completion of processing from the LVM 112, the file system 111 updates (in a step S40) the i-node information of the file related to the update data. And the client 20 may checks (in a step S41) that the updating of the file has been completed normally.

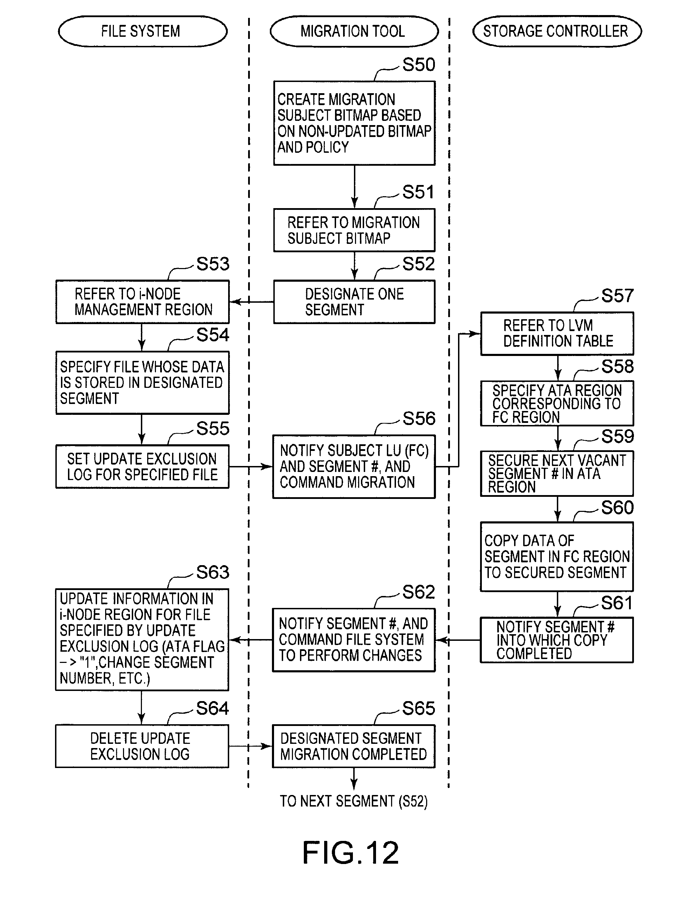

Fig. 12 is a flow chart showing the flow of the data migration processing. This processing may be performed, for example, once every day. First, before executing the data migration, the migration subject bitmap T3 is created (in a step S50).

In other words, based on the non-updated bitmap T2 and the migration policy 113A, the migration tool 113 creates the migration subject bitmap T3 by extracting those of the non-updated segments which accord with the migration policy 113A. When creating the migration subject bitmap T3, the migration tool 113 may query the file system 111 for the attributes of the files whose data is stored in the non-updated segments. The migration subject bitmap T3 which is created by doing this is stored in the memory 120 of the NAS node 100, and is copied from this memory 120 into the cache memory 220 in the storage controller 200.

The migration tool 113 refers (in a step S51) to the migration subject bitmap T3 which is stored in the memory 120, and designates its single initial segment (in a step S52). The file system 111 refers (in a step S53), in relation to the segment which has been designated as a migration subject by the migration tool 113, to the i-node management region 330A, and specifies (in a step S54) the file whose data is stored in the designated segment. And the file system 111 sets an "update exclusion log" for the file whose data is stored in the designated segment (in a step S55) . This update exclusion log is a process which forbids updating to the file by any client 20. Updating is prohibited during the data migration, in order to prevent the data which is to be the subject of shifting from being updated, and in order to maintain matching between the data before shifting and the data after shifting.

When the migration tool 113 checks that updating to the file which is to be the subject of migration has been prohibited, it commands (in a step S56) the storage controller 200 to perform the data migration. In this command, there is included the LUN in the FC region and the segment number which were recognized by the storage controller 200.

On receipt of the command from the migration tool 113, the storage controller 200 refers to the LVM definition table T1 (in a step S57), and specifies the ATA region which corresponds to the designated FC region (in a step S58). And the storage controller 200 secures the number of the next vacant segment in this ATA region (in a step S59). The data is stored in the ATA region so that it is used in order from this vacant segment, and so that no empty gaps remain.

The storage controller 200 reads out the data from the segment which is to be shifted, and stores (in a step S60) this data in the vacant segment which was secured in the step S59. And the storage controller 200 notifies the number of the segment into which the data has been copied, in other words the segment number of the destination of data shifting, to the migration tool 113 (in a step S61).

On receipt of the segment number which is the destination of data shifting from the storage controller 200, the migration tool 113 commands the file system 111 to change the information relating to the file which has been shifted (in a step S62) . In this command, there is included the segment number of the destination of data shifting which has been notified by the step S61.

The file system 111 changes (in a step S63) a portion of the information which is entered in the i-node region 330A for the file which has been shifted, in other words for the file which was set in the update exclusion log in the step S55. In concrete terms, the file system 111 changes the ATA flag of the file which has been shifted from "0" to "1", and changes the segment number of the storage address to the segment number which is the object of shifting. Furthermore, the file system 111 changes the status of the segment number which was the subject of being shifted, in other words the status of the segment number in the FC region which was designated as a migration subject, to being a vacant segment. This segment now becomes capable of being directly used to store other data.

And the file system 111 deletes (in a step S64) the update exclusion log which was set in the step S55, and the migration tool 113 checks (in a step S65) that the shifting of data for the single segment which was selected in the step S52 has been completed. The steps S52 through S65 are repeated until all of the segments which were entered into the migration subject bitmap T3 as being the subjects of migration have been shifted.

According to its structure as described above, this embodiment affords the following beneficial effects. Since the file data is shifted in units of segments in this embodiment, it is not necessary to search through the entire file tree stored in the volume which is the source of shifting, or the like. Due to this, it is possible to reduce the load on the NAS node 100, so that it is possible to suppress performance decrease of the NAS node 100 during data migration, and also to enhance the convenience of use.

Since, with the storage control device 10 of this embodiment, it is possible to build up a large virtual volume 340 by joining together the plurality of logical volumes 330 and 331, accordingly it is easy to construct a file tree having a very large number of files within this virtual volume 340. However, according to this embodiment, even in the case that a comparatively large file tree has been constructed, it is possible to suppress increase of the load on the NAS node 100, and to perform the migration of data in an efficient manner.

Since, in this embodiment, whether or not to perform shifting is decided in units of segments, and the data is shifted in units of segments, accordingly it is possible to reduce the time period in which the update exclusion log is set. Accordingly the client 20 is able to utilize the data quickly after it has been shifted, so that the convenience of use is enhanced.

Since, in this embodiment, the data is shifted in units of segments, accordingly, when the shifting of the data has been completed, it is immediately possible to reuse a segment which has been the source of shifting as a vacant segment, so that the convenience of use is enhanced.

In this embodiment, the determination of the subjects for data migration is performed by executing the processing by the storage controller 200 for detecting the non-updated segments (i.e. the processing for creating the non-updated bitmap T2), and the processing by the NAS node 100 for selecting the segments which are to be the subject of migration (i.e. the processing for creating the migration subject bitmap T3), asynchronously. Accordingly it is possible to specify the migration subjects by cooperation between the NAS node 100 and the storage controller 200, so that it is possible to prevent all of the load from being focused on the NAS node 100.

In this embodiment, the NAS node 100 specifies the data which is to be the subject of migration, and the actual data migration is performed by the storage controller 200. Accordingly, the load on the NAS node 100 can be alleviated by a yet further level.

In this embodiment, the already existing update bitmaps T4 are also utilized for snapshot creation and the like, and pre-processing (detection processing for non-updated segments) is performed in order to detect the subjects for migration. Accordingly it is possible to implement the data migration in units of segments, without making any great change in the structure of the storage controller 200.

Moreover, in this embodiment, it is arranged for the non-updated bitmap T2 and the migration subject bitmap T3 to be shared between the memory 120 within the NAS node 100 and the cache memory 220 within the storage controller 200. Accordingly it is not necessary, for example, to transfer these bitmaps T2 and T3 by using commands. Due to this, it is possible to share these bitmaps T2 and T3 with a comparatively simple structure, and moreover without increasing the load on the NAS node 100 and on the storage controller 200.

In this embodiment, the update bitmaps T4 are kept within the storage controller 200, and the non-updated bitmap T2 which is created from these update bitmaps is shared with the NAS node 100. Accordingly, it is possible to use the memory resources of the NAS node 100 in an efficient manner.

### EMBODIMENT 2

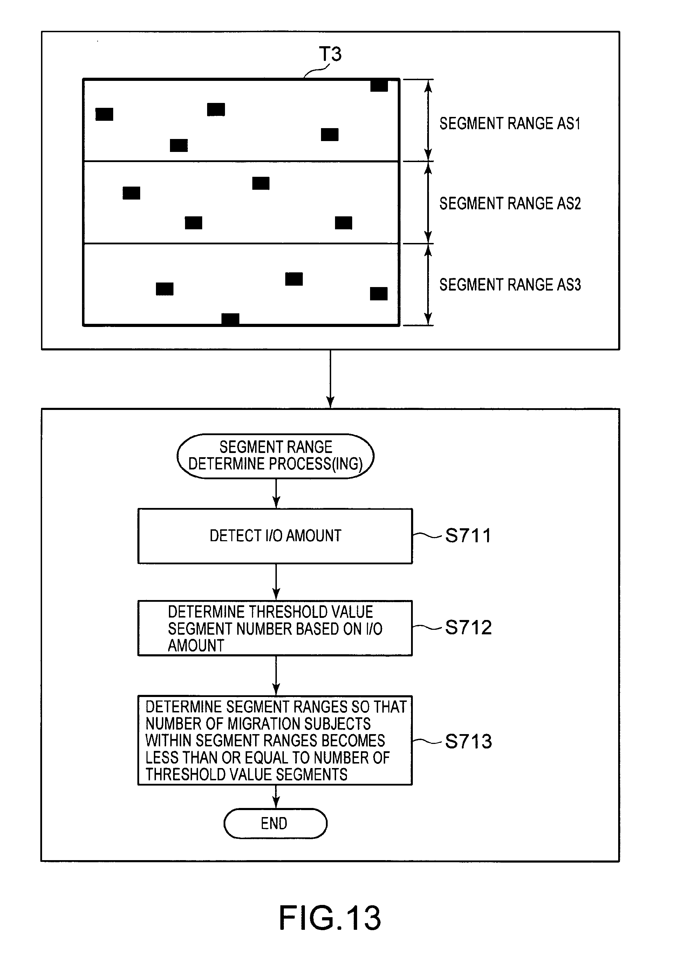

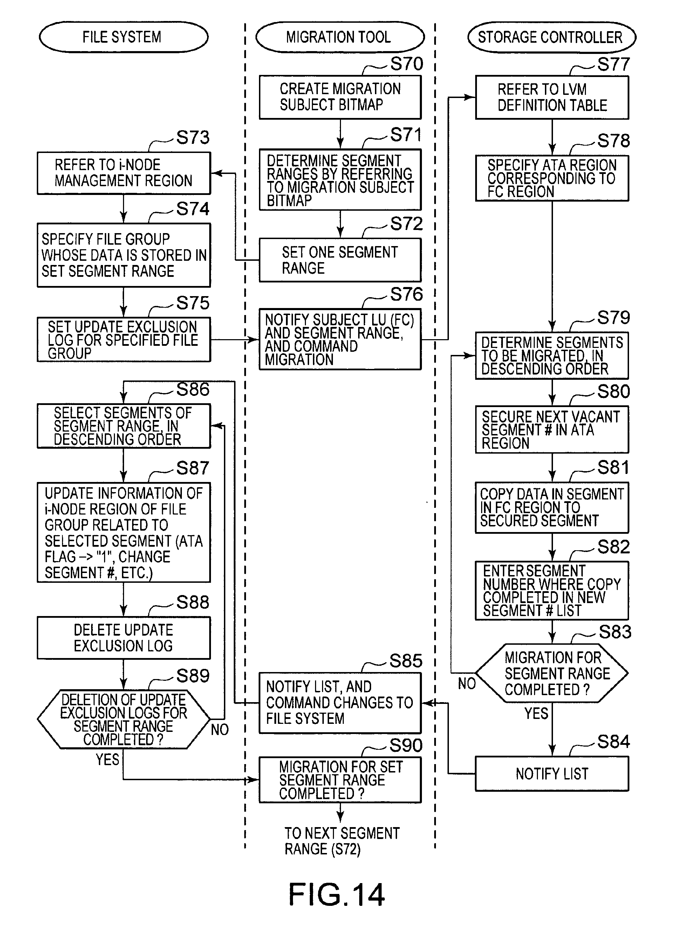

A second embodiment of the present invention will now be explained based on Fig. 13 and Fig. 14. In this embodiment, the migration subject bitmap T3 is divided into a plurality of areas, and the data shifting is performed in units of segments for each of the areas. This embodiment and the other embodiments described hereinafter correspond to variations of the first embodiment.

Fig. 13 is an explanatory figure showing the situation in which a plurality of segment ranges are set for the migration subject bitmap T3. As shown in the upper portion of Fig. 13, segment ranges AS1 through AS3 are set in the migration subject bitmap T3, and the data migration is executed in units of segments for each of these segment ranges AS1 through AS3.

In the lower portion of Fig. 13, there is given a flow chart which shows the flow of processing for determining the size of the segment ranges. This processing shows the detail of the step S71 in Fig. 14. First, the migration tool 113 detects (in a step S711) the current load of access requests to the file system 111 from the client 20.

The migration tool 113 determines (in a step S712) a threshold value segment number based on the load which it has detected. This threshold value segment number is an upper limit value for the number of migration subject segments included in the segment ranges AS1 through AS3. Since the greater is this migration subject number, the longer does the time period until the data migration for this segment range is completed become, accordingly the number of migration subject segments which are included in each of the segment ranges AS1 through AS3 is limited.

And the migration tool 113 determines (in a step S713) each of the segment ranges AS1 through AS3 so that the number of migration subject segments within each of the segment ranges AS1 through AS3 becomes less than or equal to the number of threshold value segments. It should be understood that although, in the above described example, the threshold value segment number was described as being calculated based on the current load situation of the NAS node 100, the present invention is not to be considered as being limited by this feature; it would also be acceptable to arrange for this threshold value segment number to be a fixed value; or it would also be acceptable to arrange for this threshold value segment number to be settable by the user. Furthermore, the number of segment ranges is not limited to being three; it may be any number from two upwards.

Fig. 14 shows the flow of the data migration processing in this embodiment. This processing may be performed, for example, once per day. In the same manner as before, the migration subject bitmap T3 is created (in a step S70) before actually performing the data migration. As described along with Fig. 13, the migration tool 113 sets (in a step S71) a plurality of segment ranges AS1 through AS3 in the migration subject bitmap T3.

When the migration tool 113 sets the initial segment range AS1 first (in a step S72), the file system 111 refers (in a step S73) to the i-node management region 330A, and specifies (in a step S74) the file group whose file data is stored in the migration subject segment which is included in the set segment range AS1. And the file system 111 sets (in a step S75) an update exclusion log for this file group which has been specified.

The migration tool 113 commands the storage controller 200 to perform migration of the data (in a step S76). In this command, there are included the LUN and the segment range AS1 in the FC region which were recognized by the storage controller 200. The migration tool 113 is able to notify the segment range AS1 to the storage controller 200 by specifying the leading segment number and the final segment number of the segment range AS1, or by specifying its leading segment number and its number of segments.

In the same manner as in the previously described embodiment, on receipt of this command from the migration tool 113, the storage controller 200 refers to the LVM definition table T1 (in a step S77), and specifies the ATA region which corresponds to the indicated FC region (in a step S78) . And the storage controller 200 determines (in a step S79), from among the migration subject segments which are included in the segment range AS1 which has been indicated, in descending order, the segments whose data should be shifted.

The storage controller 200 secures the number of the next vacant segment in the ATA region (in a step S80), and stores the data of the segment which is to be shifted in this vacant segment which it has secured (in a step S81). And the storage controller 200 enters the number of this segment into which the data has been copied into a new segment number list (in a step S82). This new segment number list is information for specifying the numbers of the segments to which data has been shifted.

Moreover, the storage controller 200 decides (in a step S83), for the segment range AS1 which has been set, whether or not the data shifting of the migration subject segments has been completed. The steps S79 through S82 are repeated, and the new segment number list is updated, until shifting to the ATA region has been completed for all of the migration subject segments within the segment range AS1 which has been set. When the shifting of the data for the segment range AS1 which has been set is completed, the storage controller 200 notifies (in a step S84) the new segment number list to the migration tool 113.

The migration tool 113 notifies the file system 111 of the new segment number list which it has received from the storage controller 200, and commands (in a step S85) change of the information related to the files which have been shifted.

And the file system 111 selects (in a step S86), in descending order, the migration subject segments which are included in the segment range AS1 which has been set, and updates (in a step S87) each of the ATA flag and the segment number related to the segment which has been selected. The segment number before shifting is rewritten to the shift destination segment number which has been entered in the new segment number list. Furthermore, the file system 111 enters the segments whose ATA flags have been updated to "1" as vacant segments.

The file system 111 deletes the update exclusion log (in a step S88) for the segment whose ATA flag and segment number have been updated. And the file system 111 repeats the steps S86 through S88 until (in a step S89) all of the update exclusion logs within the segment range AS1 which has been set have been deleted.

When the file system 111 has completed processing for the segment range AS1, the migration tool 113 checks (in a step S90) that data shifting within the segment range AS1 which was selected in the step S72 has been completed. And the steps S72 through S90 are repeated until the data shifting has been completed for all of the segment ranges.

This second embodiment having the above type of structure also furnishes the same beneficial effects as the first embodiment described above. In addition, with this second embodiment, the structure is such that the plurality of segment ranges AS1 through AS3 are set in the migration subject bitmap T3, and the data is shifted for each segment range. Accordingly, it is possible toprocess a plurality of migration subject segments all together at one time. By doing this, it is possible to increase the number of vacant segments in the FC region quickly.

Furthermore, since a plurality of migration subject segments are handled at one time all together, the frequency of exchange of information between the NAS node 100 and the storage controller 200 is reduced, and accordingly it is possible to reduce the load on the NAS node 100 by yet a further level.

Furthermore, since the data for a plurality of segments is all shifted together at one time, accordingly it is possible to reduce the time period which is required for data migration.

Furthermore since, in this embodiment, the number of migration subject segments which are included in each of the segment ranges AS1 through AS3 may be adjusted, it is possible to make the time period until data shifting of each segment range comparatively short.

### EMBODIMENT 3

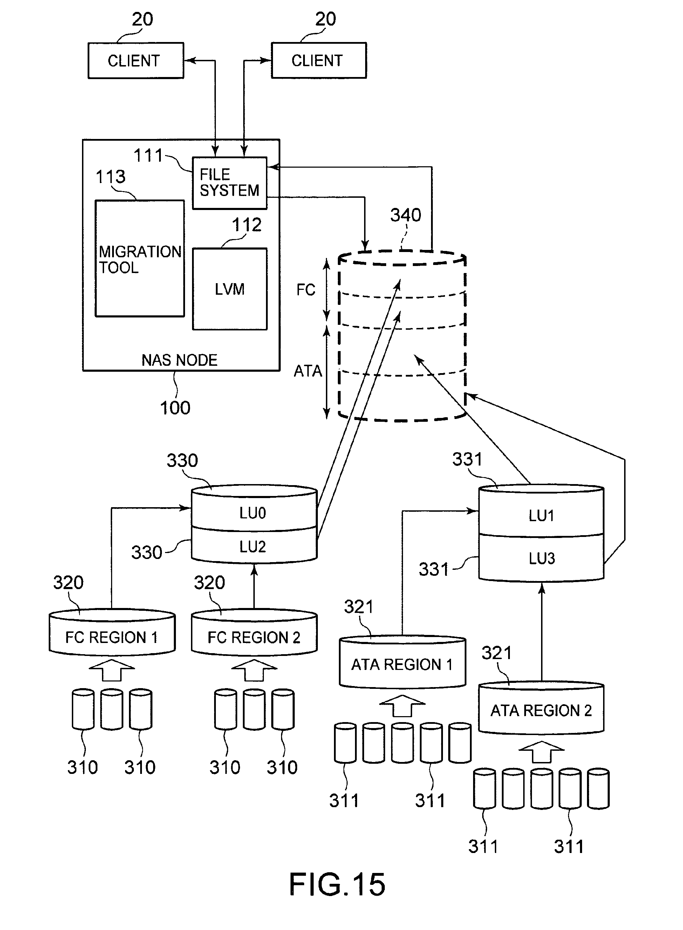

A third embodiment of the present invention will now be explained based on Figs. 15 through 17. In this third embodiment, the case will be explained in which the structure of the virtual volume 340 is changed. As has been described in the explanation of the LVM definition table T1, it is possible to change the structure of the virtual volume 340.

Fig. 15 is an explanatory figure schematically showing the software structure of the NAS node 100 and the structure of the hierarchical storage. To the FC region of the virtual volume 340, there correspond a plurality of logical volumes 330 (LU0, LU2), each of which is founded on FC disks 310. And, to the ATA region of the virtual volume 340, there correspond a plurality of logical volumes 331 (LU1, LU3), each of which is founded on ATA disks 311.

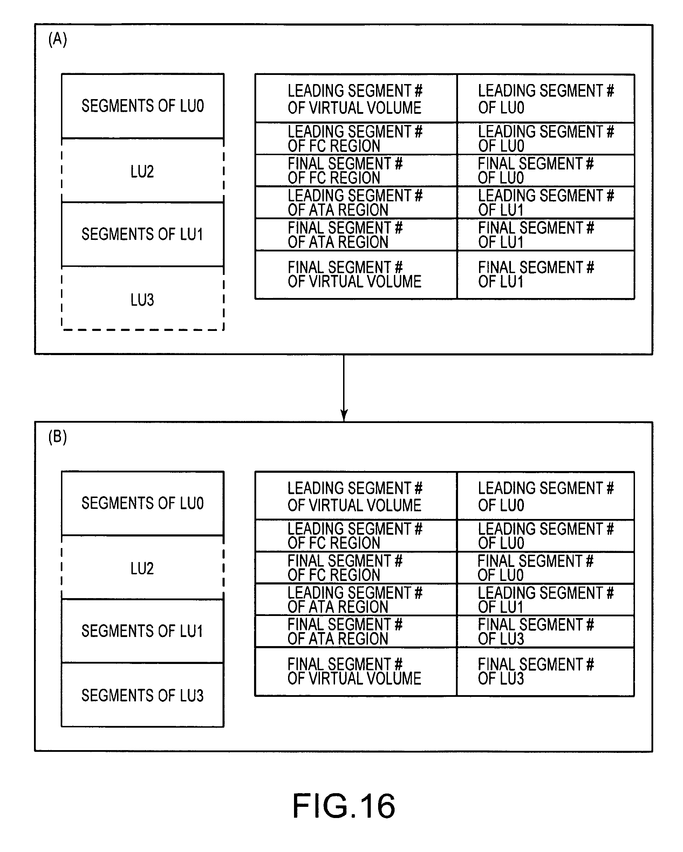

And Fig. 16 is an explanatory figure, schematically showing a management state for the segments when the FC region and the ATA region are made up from a plurality of logical volumes. Fig. 16(a) shows a case in which the FC region is made up from a single logical volume (LU0), and in which the ATA region is also made up from a single logical volume 331 (LU1). In this case, the leading segment number of the FC region and the leading segment number of the logical volume 330 (LU0) agree with one another, and the final segment number of the FC region and the final segment number of the logical volume 330 (LU0) agree with one another. In the same manner, the leading segment number of the ATA region and the leading segment number of the logical volume 331 (LU1) agree with one another, and the final segment number of the ATA region and the final segment number of the logical volume 331 (LU1) agree with one another.

By contrast, Fig. 16(b) shows a case in which another logical volume 331 (LU3) has been added to the ATA region. The leading segment number of the ATA region does not change. On the other hand, the final segment number of the ATA region becomes the final segment number of the logical volume 331 (LU3) which has been added. What must be paid attention to here is the point that, the leading segment number of the logical volume 331 (LU3) which has been added continues on from the final segment number of the logical volume 331 (LU1) which is positioned at the front end of the ATA region. In other words, the segments within the ATA region are managed so that their segment numbers are consecutive.

In the same manner, if another logical volume 330 (LU2) is added to the FC region as well, the segment numbers within the FC region are managed so that they are consecutive. It should be understood that each of the bitmaps T2, T3, and T4 is managed so that they respectively correspond for the FC region and for the ATA region.

In this embodiment, a limit value exists for the size of the FC region. In other words, the size of the FC region may be extended up to SA2, which has been set as the leading address of the ATA region. If, hypothetically, the value of SA2 is taken as being 2TB, then, if the volume of 1TB is allocated to the present FC region, it is possible to add a further 1TB of volume. If the value of SA2 is set to be larger, it is possible further to extend the size of the FC region by just that amount. It should be understood that it is possible to extend the ATA region up to the maximum size which can be managed by the storage control device 10.

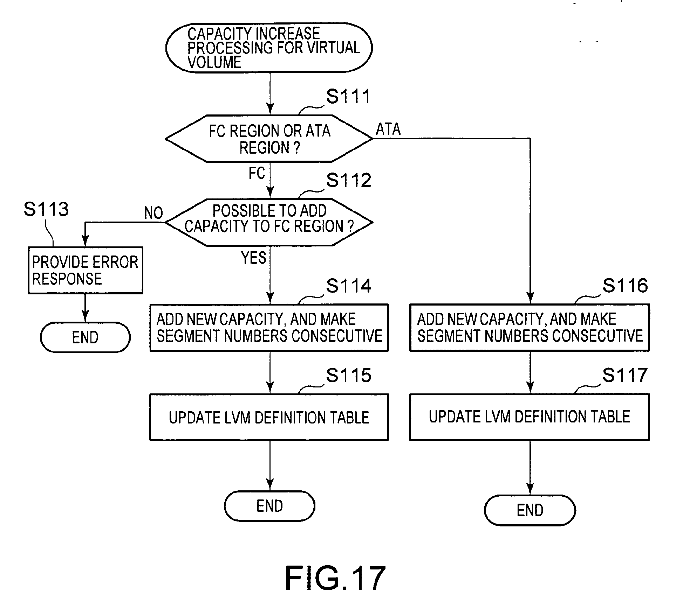

Fig. 17 is a flow chart showing the flow of processing for increasing the capacity of the virtual volume 340. This processing may be performed, for example, according to a command from the management terminal 30. First, the storage control device 10 decides (in a step S111) for which of the FC region and the ATA region an increase in the capacity has been commanded.

If a capacity increase has been commanded for the FC region, the storage control device 10 decides whether or not it is possible to add capacity to the FC region (in a step S112). If the size of the FC region has attained its limit value (SA2) (S112: NO), then (in a step S113) the storage control device 10 notifies the management terminal 30 to the effect that it is not possible to increase the capacity.

On the other hand, if it is possible to add capacity to the FC region (S112: YES), then the storage control device 10 adds new capacity to the FC region, continues the segment numbers within the FC region (in a step S114), and updates the LVM definition table T1 (in a step S115).

If it has been commanded to increase the capacity of the ATA region, then the storage control device 10 adds new capacity to the ATA region, continues the segment numbers within the ATA region (in a step S116), and updates the LVM definition table T1 (in a step S117).

With this third embodiment of the present invention as well, the same beneficial embodiments are furnished as in the case of the first embodiment described above. In addition, with this third embodiment, it is possible to change the structure of the virtual volume 340 according to the state of use of the virtual volume 340 by the clients 20 and the like, so that the convenience of use is enhanced.

It should be understood that the present invention is not to be considered as being limited to the embodiments described above. A person skilled in the art will be able to make various additions and/or changes within the range of the present invention . For example, the embodiments described may be combined as appropriate.

## Claims

1. A storage control device comprising:
a file controller;
a block controller;
a file manager which manages information related to various files, and processes file access requests from a host device by using a cache memory;
a volume manager which joins together a first logical storage device which is provided on a first physical storage device, and a second logical storage device which is provided on a second physical storage device having a performance different from said first physical storage device, into a single virtual volume, and supplies this virtual volume to said file manager;
an update manager which manages the update states of said first logical storage device and said second logical storage device in predetermined management units;
a migration controller which, based on the state of updating which is managed in said management units and on said information on the various files which is managed by said file manager , specifies data which is to be a subject for migration, and issues a command for shifting this specified data between said first logical device and said second logical device; and
a migration executant which, based on said command from said migration controller, shifts said data in said management units between said first logical device and said second logical device.

2. The storage control device according to Claim 1, wherein segment units, which are data management units for said cache memory, are used as said management units; and
said update manager manages the update states of said logical storage devices with an update bitmap, by said segment units.

3. The storage control device according to Claim 2, wherein said update manager creates the update bitmap for each one of said logical storage devices at a predetermined cycle, and moreover, based on the logical sum of a plurality of said update bitmaps which are created within a predetermined time period, creates a non-updated bitmap for detecting non-updated segments which are not updated within said predetermined time period; and
said migration controller, based on said non-updated bitmap and said information on the files which is managed by said file manager, creates a migration subject bitmap for specifying data which is stored in said non-updated segments as data to be a subject for migration, and, based on this migration subject bitmap, issues a command to said migration executant for shifting said migration subject data between said first logical storage device and said second logical storage device.

4. The storage control device according to Claim 3, wherein said migration controller enters, into said migration subject bitmap, only non-updated segments which accord with a migration policy set in advance among said non-updated segments which are included in said non-updated bitmap.

5. The storage control device according to Claim 3 or Claim 4, wherein said migration controller issues said command for each non-updated segment which is entered into said migration subject bitmap.

6. The storage control device according to Claim 3, wherein said migration controller divides said migration subject bitmap into a plurality of segment ranges, and issues said command at a time for all of said non-updated segments included in said segment range, for each one of said segment ranges.

7. The storage control device according to any one of Claims 3 to 6, wherein
said file controller comprises said file manager, said volume manager, and said migration controller;
said block controller comprises said update manager and said migration executant; and
said non-updated bitmap and said migration subject bitmap are shared by said file controller and said block controller.

8. The storage control device according to Claim 7, wherein an internal bus which is connected to said cache memory of said file controller, and an internal bus which is connected to the other memory of said block controller, are coupled together via a bridge circuit; and
said non-updated bitmap and said migration subject bitmap are shared between said file controller and said block controller by using copying between said memories via said internal buses.

9. The storage control device according to any one of Claims 3 to 8, wherein said update manager is provided within said file controller.

10. A data migration method for migrating data using a storage control device which comprises a file controller and a block controller, comprising:
a step, performed by said file controller, of joining together a first logical storage device which is provided on a first physical storage device, and a second logical storage device which is provided on a second physical storage device, into a single virtual volume, and supplying this virtual volume to a file manager for processing file access requests from a host device by using a cache memory;
a step, performed by said block controller, of managing the update states of said logical storage devices in segment units, which are data management units for said cache memory, by creating update bitmaps at a predetermined cycle;
a step, performed by said block controller, of creating and storing a non-updated bitmap for detecting non-updated segments which are not updated within a predetermined time period, based on the logical sum of a plurality of said update bitmaps which are created within said predetermined time period;
a step of sharing said non-updated bitmaps between said file controller and said block controller;
a step, performed by said file controller, of creating and storing a migration subject bitmap for specifying files stored in said non-updated segments as data to be a subject for migration, based on said non-updated bitmap and information on the various files which is managed by said file manager;
a step of sharing said migration subject bitmap between said file controller and said block controller;
a step, performed by said file controller, of prohibiting updating to said files stored in said non-updated segments which are entered into said migration subject bitmap;
a step, performed by said file controller, of issuing a command to said block controller for shifting the data stored in said non-updated segments which are entered into said migration subject bitmap from said first logical storage device to said second logical storage device;
a step, performed by said block controller, of shifting data stored in said first logical storage device to said second logical storage device in units of one or a plurality of segments, based on said issued command and said migration subject bitmap; and
a step, performed by said file controller, of canceling the prohibition of updating for the files for which updating is prohibited, when the shifting of said data is completed.

11. A storage control device comprising:
a file controller which controls file access;
a block controller which controls block access; and
a high speed physical storage device and a low speed physical storage device which are both used by said block controller;
wherein a cache memory of said file controller and the other memory of said block controller are connected together by an internal bus of said file controller and an internal bus of said block controller being coupled together via a bridge circuit;
said file controller comprises a file system, a volume manager, and a migration controller;
said block controller comprises an update manager and a migration executant;
said file system processes file access requests from a host device using said cache memory;
said volume manager, by positioning a high speed logical storage device which is provided on said high speed physical storage device at a forward portion, and by positioning a low speed logical storage device which is provided on said low speed physical storage device at a subsequent portion, creates a single virtual volume from said high speed logical storage device and said low speed logical storage device, and supplies said virtual volume to said file manager;
said update manager manages the update states of said high speed logical storage device and of said low speed logical storage device for each segment, which is the unit of data management of said cache memory, and creates an update bitmap for each of said logical storage devices at a predetermined cycle, and moreover, based on the logical sum of said update bitmaps which are created within a predetermined time period, creates a non-updated bitmap for detecting non-updated segments which are not updated within said predetermined time period, and stores the non-updated bitmap in said other memory;
said non-updated bitmap stored in said other memory is copied from said other memory to said cache memory by being copied between said memories;
said migration controller creates a migration subject bitmap for specifying migration subject segments which are to be migrated, by querying said file system for attributes of files which are stored in said non-updated segments included in said non-updated bitmap which is stored in said cache memory, and stores said migration subject bitmap in said cache memory;
said migration subject bitmap stored in said cache memory is copied from said cache memory to said other memory by being copied between said memories;
said migration controller issues a command to said migration executant for shifting data which is stored in said non-updated segments entered as said migration subject segments from said high speed logical storage device to said low speed logical storage device;
said migration executant, based on said issued command and said migration subject bitmap, shifts data which is stored in said high speed logical storage device to said low speed logical storage device, in units of one or a plurality of segments; and
said file system prohibits updating of said migration subject data by said host device, until the shifting of saidmigration subject data is completed.
